# FASCICULE DE BREVET EUROPEEN

(11) **EP 0 728 273 B1**
(45) Date de publication et mention de la délivrance du brevet: **13.05.1998**
(21) Numéro de dépôt: 95900798.0
(22) Date de dépôt: 07.11.1994
(51) Int. Cl.: F16L 11/08, B32B 27/36

(54) **CANALISATION POUR FLUIDE DE REFRIGERATION**
ROHRLEITUNG FÜR KÜHLFLÜSSIGKEIT
COOLANT PIPING

(30) Priorité: 09.11.1993 FR 9313360
(43) Date de publication de la demande: 28.08.1996
(73) Titulaire: NOBEL PLASTIQUES, F-92000 Nanterre (FR)
(72) Inventeur: DOUCHET, Jean-Claude, F-60150 Le Plessis-Brion (FR)
(74) Mandataire: Robert, Jean-Pierre
(86) Numéro de dépôt international: FR9401287
(87) Numéro de publication internationale: WO9513494

(56) Documents cités:
- EP-A- 0 294 181
- EP-A- 0 461 966
- DE-A- 3 439 312
- GB-A- 2 117 482
- US-A- 4 444 700
- US-A- 4 842 024
- US-A- 4 907 625
- DATABASE WPI Week 9115, Derwent Publications Ltd., London, GB; AN 91-107547 & JP,A,3 051 596 (NITTA KK) 5 Mars 1991

## Description

La présente invention concerne une canalisation pour fluide haute pression et plus particulièrement pour véhiculer un fluide à changement d'état comme l'est un fluide réfrigérant.

Les canalisations actuelles pour fluide réfrigérant comme le fréon (dans sa version la plus récente appelée R134a) sont réalisées en élastomère multicouche comprenant une armature noyée dans le caoutchouc et rendue solidaire des différentes couches au moment de la vulcanisation.

Certaines de ces canalisations comportent un revêtement intérieur formé d'une couche d'un matériau plastique tel qu'un polyamide afin d'augmenter l'imperméabilité de la paroi à l'égard du fluide réfrigérant transporté, qu'il soit à l'état liquide ou à l'état gazeux.

L'inconvénient majeur de ces canalisations réside dans leurs poids, leur encombrement et leur manque de souplesse.

Dans le document DE 34 39312, on a proposé une canalisation pour remédier à ces inconvénients, canalisation qui comporte une couche interne en un mélange de polyamide caoutchouc, un revêtement en polyoléfine, et un renforcement comprenant une structure filamentaire en polyester et un revêtement extérieur en polyuréthane, polyester caoutchouc ou feuille métallique.

La présente invention entend proposer une autre solution en séparant les éléments destinés à assurer une barrière contre le fluide réfrigérant des éléments pour assurer la tenue à la pression, donc une canalisation ayant une âme interne qui assure une fonction barrière multicouche et une partie externe pour résister à la pression.

La nature de l'âme interne et notamment la nature de la matière formant sa couche externe constitue un facteur contraignant pour la réalisation de la partie extérieure de la canalisation. Lorsque cette surface externe est un polyamide, il est pratiquement impossible de lier une structure de renfort filamentaire. L'invention propose, après de nombreux essais, une liaison particulière entre cette structure interne et l'armature filamentaire qui, outre le fait qu'elle soit de qualité, et notamment sous des températures élevées et de fortes pressions assure à la canalisation de pouvoir être réalisée avec une paroi relativement mince, ce qui lui confère une grande souplesse.

A cet effet donc l'invention a pour objet une canalisation qui comporte une âme interne dont la couche extérieure est en polyamide ou EVOH qui assure une fonction barrière efficace et une armature externe résistant à la pression, comportant une structure de renfort filamentaire telle qu'un guipage, un tressage ou un tricotage, placée autour de l'âme, une couche extérieure de recouvrement en caoutchouc thermoplastique à base de polyoléfine ou de polyprobutyl et au moins un agent pour assurer la liaison de cette structure filamentaire au moins à l'âme interne. Etant donné le peu de compatibilité entre la surface extérieure de l'âme et la nature des fils employés (polyesters ou polyamides aromatiques), de nombreux essais furent entrepris pour découvrir que l'agent de liaison efficace devait être soit un polyuréthanne thermofusible (hot melt) soit un polyamide thermofusible (hot melt) soit enfin un polyester thermodurcissable.

L'âme interne comportera de manière préférée, entre par exemple deux couches de polyamide, une couche intermédiaire réalisée à partir d'un élastomère polyamide, par exemple un copolyamide élastomère de type ELY 60 ou ELX23NZ, produits développés par la société EMS CHEMIE AG. à Zürich. Cette âme est fabriquée par coextrusion et constitue une solution intéressante au transport d'un fluide frigogène dans une conduite souple tout en possédant d'excellentes qualités de barrière et de résistance chimique. Elle peut également incorporer une couche coextrudée de E.V.O.H. soit entre deux couches de polyamide soit à l'extérieur de ces couches.

Selon une première méthode, l'armature externe sera réalisée par surextrusion sur l'âme d'un polyuréthanne ou polyamide "hot melt" ou d'un polyester thermodurcissable suivie de la mise en place de la structure filamentaire (guipage, tressage ou tricotage réalisés à partir de fibres de polyester ou de polyamide aromatique) puis surextrusion d'une seconde couche de polyamide ou polyuréthanne "hot melt" ou polyester thermodurcissable avec, de préférence, une coextrusion d'acide maléique pour renforcer la liaison avec la couche externe en caoutchouc thermoplastique.

Selon une variante de cette méthode, il suffit de ne déposer qu'une couche d'agent de liaison entre l'âme et la structure filamentaire. Dans une autre variante l'agent de liaison peut être placé entre la structure filamentaire et soit le revêtement extérieur soit l'âme à condition que la viscosité de cette couche permette son exsudation au travers de la structure filamentaire pour atteindre l'âme ou le revêtement.

Lorsque l'on réalise un guipage, il est possible de ne réaliser qu'une couche de l'agent de liaison entre les deux nappes de fils qui seront enroulées successivement et de manière croisée sur l'âme.

Si l'on souhaite une canalisation plus raide, il est possible de remplacer le caoutchouc thermoplastique par une couche de polyamide ; dans ce cas l'acide maléique n'est pas indispensable.

Dans une autre variante de réalisation, on mettra en place, autour de l'âme centrale une structure filamentaire à partir de fibres préimprégnées de polyuréthanne ou de polyamide "hot melt" ou de polyester thermodurcissable. La liaison assurée entre l'âme, le guipage et le revêtement externe est de moindre qualité mais de coût inférieur et peut suffire dans certaines applications.

D'autres caractéristiques et avantages ressortiront de la description donnée ci-après à titre indicatif d'un mode de réalisation de l'invention.

Il sera fait référence au dessin annexé dans lequel :
- la figure 1 est une vue illustrant les diverses couches formant un premier mode de réalisation d'une canalisation conforme à l'invention,
- les figures 2, 3 et 4 illustrent des variantes de réalisation de la figure 1.

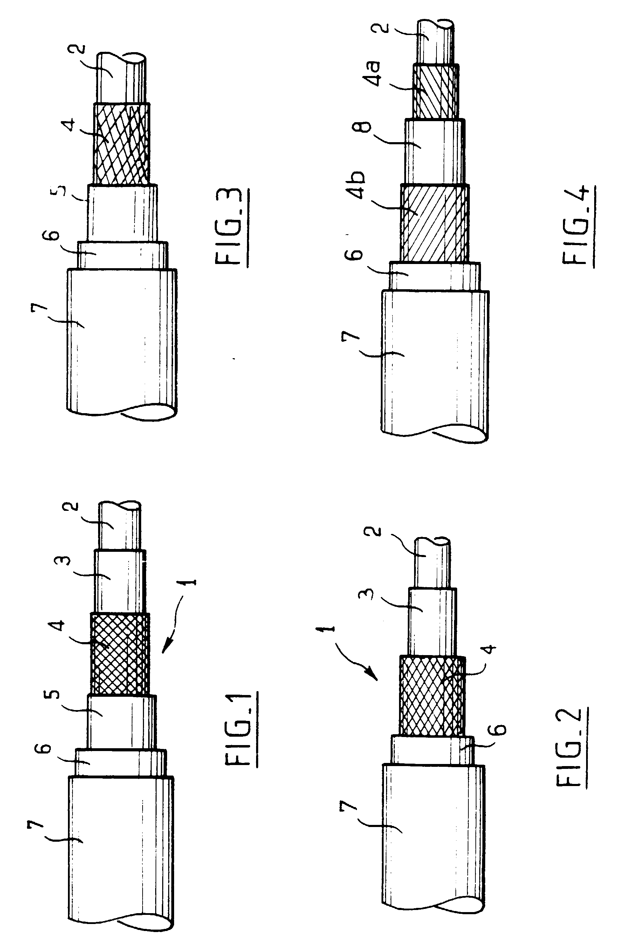

La tubulure 1 représentée à la figure 1 comporte une âme interne 2 formée essentiellement d'une pluralité de couches polyamides, par exemple trois, à savoir un polyamide 12 interne d'environ 0,35 mm d'épaisseur, une couche intermédiaire en élastomère polyamide d'épaisseur de l'ordre de 0,2 mm et une couche externe en polyamide 6 sur 0,45 mm d'épaisseur formée par coextrusion pour constituer une paroi tubulaire d'environ 1 mm d'épaisseur.

La canalisation de l'invention comporte ensuite, déposée par surextrusion sur l'âme interne, une couche de hot melt polyamide ou hot melt polyuréthanne ou polyester thermodurcissable 3 au-dessus de laquelle est mis en place un guipage, un tressage ou un tricotage de fibres 4 par exemple en polyester ou en polyamide aromatique tel que le Kevlar (marque enregistrée).

La couche 5 est identique à la couche 3 c'est-à-dire une couche de polyuréthanne ou polyamide "hot melt" ou polyester thermodurcissable, recouverte par coextrusion d'une couche d'acide maléique 6 qui favorise la liaison des couches intermédiaires avec la couche extérieure 7 en caoutchouc thermoplastique à base de polyoléfine ou de polyprobutyle. L'épaisseur des couches 3 et 5 est de l'ordre de 5 centièmes à un dixième de millimètre. Celle de la couche 7 est comprise entre 1 et 2 mm. La couche d'acide maléique est épaisse de quelques centièmes de millimètres.

On notera l'intérêt d'utiliser des agents de liaison tels que du polyamide ou du polyuréthanne "hot melt" ou du polyester thermodurcissable : ils ont une résistance et une tenue en température (entre 150 et 200°C) bien supérieure à celle des adhésifs solvantés.

A la figure 2 on a représenté une variante dans la manière de réaliser une canalisation conforme à l'invention. La couche 5 d'agent de liaison est supprimée au profit d'une seule couche 3. Dans certains cas la viscosité sera déterminée pour que l'agent de liaison puisse passer entre les "mailles" de la structure filamentaire 4 pour atteindre le revêtement externe 7 par l'intermédiaire, si nécessaire, de la couche d'acide maléique 6. De manière précise on indiquera une composition de canalisation réalisée avec une couche 3 seulement et une armature 4 serrée qui n'a pas laissé passé d'agent de liaison conformément à l'invention. Cette composition a donné satisfaction en conservant ses qualités mécaniques et de barrière sous une pression de 35 bars et une température de 135°C.. Ainsi l'âme interne multicouche comporte une couche extérieure en polyamide modifié ELX23NZ fabriqué par la firme Suisse EMS CHEMIE AG., l'agent de liaison entre l'âme intérieure et l'armature de renfort étant une colle polyuréthanne réticulable référence Purfect 254 ou 413 de la société NATIONAL STARK, la couche de renfort est réalisée avec des fils polyester Siden 855T 1440 dtex de la société AKZO, l'agent adhésif entre ce renfort et la couche externe en élastomère thermoplastique étant un produit référence PO 1015 F (polymère greffé anhydride maléique) de la société EXXON, l'élastomère thermoplastique étant du type SANTOPREN, au choix un polypropylène EPDM (101-64) de la société AES ou un polypropylène Butyl de la société DSM. La réticulation de la colle s'opère de manière connue à l'eau chaude.

A la figure 3 on a représenté une variante dans la manière de réaliser une canalisation conforme à l'invention. La couche 3 d'agent de liaison est supprimée au profit d'une seule couche dont la viscosité est déterminée pour qu'elle puisse passer entre les "mailles" de la structure filamentaire 4 pour atteindre l'âme interne 2.

A la figure 4 enfin, la structure filamentaire est réalisée par l'enroulement consécutif de deux nappes 4a et 4b de fils avec croisement de leur orientation par rapport à l'axe de l'âme. Dans ce cas, l'agent de liaison peut être limité à une seule couche 8 placée entre les deux nappes 4a et 4b formant le guipage et exsudant au moins en direction de l'âme.

Dans une variante de réalisation de cette tubulure, on supprime les couches 3 et 5 et on imprègne l'armature "textile" guipée ou tressée 4 directement avec ces produits hot melt. La liaison sera bien entendu limitée aux points de contact entre l'armature 4, l'âme intérieure 2 et le revêtement 7 avec pour cette liaison une addition d'acide maléique 6.

On peut préférer, pour certaines applications un revêtement extérieur en polyamide, ce qui conférera plus de raideur à la tubulure, l'acide maléique n'étant pas nécessaire entre le polyuréthanne (ou polyamide) hot melt et le revêtement extérieur.

Il est enfin possible de varier la structure de l'âme interne en additionnant par coextrusion, une couche de E.V.O.H., matière connue en elle-même et pour ses fonctions barrière à l'égard de certains composants de l'essence. Cette couche peut être notamment placée à l'extérieur du polyamide multicouche et, comme elle présente les mêmes difficultés de comptabilité et de liaison avec une structure de renfort filamentaire et avec un revêtement externe souple en caoutchouc thermoplastique ou polypropylènebutyl, les mesures selon l'invention s'appliquent.

L'invention permet d'obtenir des canalisations légères et de diamètre réduit possédant de bonnes performances en ce qui concerne les fonctions barrière et la résistance à la pression (35 bars) et à la température (135°C).

## Revendications

1. Canalisation comportant une âme interne (1) multicouche dont la couche externe est en polyamide ou en EVOH, qui assure une fonction barrière efficace et une armature externe résistant à la pression, qui comporte au moins une structure filamentaire de renfort (4) placée autour de l'âme (1), une couche extérieure de recouvrement (7) et au moins un agent (3, 5) pour assurer la liaison de la structure de renfort (4) à l'âme interne (1), choisi parmi les colles thermofusibles en polyamide ou polyuréthanne ou un polyester thermodurcissable.

2. Canalisation selon la revendication 1, caractérisée en ce que l'agent de liaison (3,5) de la structure filamentaire (4) aux couches qui l'encadrent est un polyuréthanne thermofusible.

3. Canalisation selon la revendication 1, caractérisée en ce que l'agent de liaison (3, 5) de sa structure filamentaire (4) aux couches qui l'encadrent est un polyamide thermofusible.

4. Canalisation selon l'une des revendications précédentes, caractérisée en ce qu'elle comporte une couche de polymère greffé anhydride maléique (6) entre l'agent de liaison (5) et le revêtement extérieur (7).

5. Canalisation selon la revendication 1, caractérisée en ce que l'agent de liaison de la structure filamentaire (4) avec la couche de recouvrement (7) est constitué d'une couche d'un polymère greffé anhydride maléique (6) seul.

6. Canalisation selon l'une des revendications précédentes, caractérisée en ce que l'âme (2) tubulaire centrale est obtenue par coextrusion d'une pluralité de couches de polyamide et d'une couche d'E.V.O.H.

7. Canalisation selon la revendication 6, caractérisée en ce que la couche d'E.V.O.H. est en sandwich entre deux couches de polyamide.

## Patentansprüche

1. Leitung mit einer mehrerer Schichten umfassenden inneren Seele (1), deren äußere Schicht aus Polyamid oder EVOH besteht und die Funktion einer wirksamen Sperre und einer externen druckfesten Armierung hat, die mindestens eine die Seele (1) umschließende, aus Fasermaterial bestehende Verstärkungsstruktur (4), eine äußere Deckschicht (7) und mindestens ein Mittel (3,5) umfaßt, um die Verbindung der Verstärkungsstruktur (4) mit der inneren Seele (1) zu gewährleisten, wobei das Mittel ein wärmeschmelzbarer Klebstoff aus Polyamid oder Polyurethan oder ein wärmehärtbarer Polyester ist.

2. Leitung nach Anspruch 1, dadurch **gekennzeichnet**, daß das Mittel (3,5) zur Verbindung der Faserstruktur (4) mit den sie umgebenden Schichten ein wärmeschmelzbares Urethan ist.

3. Leitung nach Anspruch 1, dadurch **gekennzeichnet**, daß das Mittel (3,5) zur Verbindung der Faserstruktur (4) mit den sie umgebenden Schichten ein wärmeschmelzbares Polyamid ist.

4. Leitung nach einem der vorhergehenden Ansprüche, dadurch **gekennzeichnet**, daß sie zwischen dem Verbindungsmittel (5) und der äußeren Verkleidung (7) eine Schicht (6) aus einem Maleinsäureanhydrit Propfpolymer hat.

5. Leitung nach Anspruch 1, dadurch **gekennzeichnet**, daß das Mittel zur Verbindung der Faserstruktur (4) mit der Deckschicht (7) allein von einer Schicht (6) aus einem Maleinsäureanhydrit Pfropfpolymer gebildet ist.

6. Leitung nach einem der vorhergehenden Ansprüche, dadurch **gekennzeichnet**, daß die zentrale rohrförmige Seele (2) durch Co-Extrusion einer Mehrzahl von Polyamidschichten mit einer Schicht aus EVOH hergestellt wird.

7. Leitung nach Anspruch 6, dadurch **gekennzeichnet**, daß die EVOH-Schicht zwischen zwei Polyamidschichten eingeschlossen ist.

## Claims

1. A pipe comprising a multilayer inner core (1) whose outer layer is made of polyamide or of EVOH to provide an effective barrier function, and outer reinforcement that withstands pressure and that comprises at least one filamentary reinforcing structure (4) placed around the core (1), a covering outer layer (7), and at least one bonding agent (3, 5) for bonding the reinforcing structure (4) to the inner core (1), the agent being selected from polyurethane or polyamide hot melt adhesives and thermosetting polyesters.

2. A pipe according to claim 1, characterized in that the bonding agent (3, 5) for bonding the filamentary structure (4) to the layers on either side thereof is a hot melt polyurethane.

3. A pipe according to claim 1, characterized in that the bonding agent (3, 5) for bonding the filamentary structure (4) to the layers on either side thereof is a hot melt polyamide.

4. A pipe according to any preceding claim, characterized in that it includes a layer of maleic anhydrid grafted polymer (6) between the bonding agent (5) and the covering outer layer (7).

5. A pipe according to claim 1, characterized in that the bonding agent for bonding the filamentary structure (4) to the covering outer layer (7) is constituted by a layer of maleic anhydrid grafted polymer (6) on its own.

6. A pipe according to any preceding claim, characterized in that the central tubular core (2) is obtained by coextruding a plurality of polyamide layers together with an EVOH layer.

7. A pipe according to claim 6, characterized in that the EVOH layer is sandwiched between two polyamide layers.
